(19) Europäisches Patentamt / European Patent Office / Office européen des brevets

(11) **EP 2 444 687 B1**

(12) **FASCICULE DE BREVET EUROPEEN**

(45) Date de publication et mention
de la délivrance du brevet:
**12.12.2012 Bulletin 2012/50**

(51) Int Cl.:
***F16F 7/10*** *(2006.01)*

(21) Numéro de dépôt: **10013803.1**

(22) Date de dépôt: **20.10.2010**

(54) **Revêtement isolant à masse amplifiée**

Isolierschutz mit ausgeweiteter Masse

Insulating coating with mass amplification

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**25.04.2012 Bulletin 2012/17**

(73) Titulaire: **EUROCOPTER
13725 Marignane (FR)**

(72) Inventeurs:
• **Manfredotti, Thomas
06480 La Colle Sur Loup (FR)**
• **Caillet, Julien
13170 Les Pennes Mirabeau (FR)**

(74) Mandataire: **Pouillot, Laurent Pierre Paul
GPI & Associés
1330, rue Guillibert de la Lauzière
EuroParc de Pichaury, Bât B2
13856 Aix en Provence Cedex 3 (FR)**

(56) Documents cités:
**FR-A1- 2 909 740      GB-A- 2 265 669
SU-A1- 1 240 973**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un revêtement isolant à masse amplifiée permettant de réduire, voire même de supprimer, les déformations dynamiques d'une structure générées par des vibrations ou des chocs par exemple.

Plus particulièrement, le revêtement isolant selon l'invention est préférentiellement destiné à être monté à bord d'un giravion. En étant notamment installé sur les parois de sa cabine, le revêtement isolant atténue leurs déformations dynamiques de manière à augmenter leur durée de vie et à réduire le bruit en cabine.

Bien entendu, l'invention ne se limite pas à cette application particulière et peut être utilisée pour toutes autres applications dès l'instant où l'on souhaite réduire les déformations dynamiques d'un corps. De par sa conception, on peut éventuellement envisager d'agencer, par exemple, le revêtement isolant sur les parois d'une machine à laver, ce type d'instrument électroménager étant soumis à de fortes vibrations.

On connaît une première méthode pour réduire les vibrations d'une structure et de fait le bruit transmis par cette structure. Selon cette première méthode, on dispose une plaque additionnelle pesante, à base de plomb par exemple, contre la structure afin d'améliorer l'isolation vibratoire et/ou phonique de cette structure par effet de masse.

Cette première méthode est très efficace mais présente l'inconvénient d'être lourde. Cet inconvénient est un inconvénient majeur dans le domaine aéronautique où la masse doit être en permanence optimisée.

Selon une deuxième méthode, on réduit les vibrations et le bruit générés par une structure par l'apport d'un amortissement permettant de dissiper l'énergie vibratoire en chaleur.

On connaît un premier système mettant en oeuvre cette deuxième méthode constitué d'une plaque d'élastomère monolithique agencée sur une structure. Le pouvoir amortissant de l'élastomère amoindrit alors les déformations dynamiques de la structure, quel que soit le mode de sollicitation mécanique de cette dernière, en dissipant notamment l'énergie sous forme de chaleur.

Par rapport à la première méthode, le gain en termes de masse est important, l'élastomère étant peu pesant. Néanmoins, l'efficacité de ce premier système est limitée puisque, de la sorte, l'oscillation de la structure n'induit que des petits mouvements dans l'élastomère. Ainsi, la dissipation de l'énergie dans la plaque d'élastomère est faible.

Pour améliorer ce premier système, il est courant d'utiliser un deuxième système. Ce dernier comporte un élastomère visco-contraint, c'est-à-dire une plaque d'élastomère dont la partie supérieure est préalablement adhérisée sur un support métallique. La partie inférieure de la plaque d'élastomère, opposée à la partie supérieure, est alors fixée sur une structure.

Lors d'une déformation dynamique, par exemple une flexion de la structure générée par des vibrations, la face supérieure est maintenue par le support métallique. Cette condition aux limites supplémentaire induit un état de contraintes internes dans l'élastomère plus important que dans les cas précédents. Par conséquent, la dissipation de l'énergie vibratoire dans la plaque d'élastomère s'en trouve augmentée.

Le deuxième système a certes un rendement supérieur à celui du premier système. Cependant, pour des applications nécessitant une dissipation de l'énergie vibratoire importante, il s'avère encore insuffisant. En outre, il peut s'avérer lourd.

On connaît, par le document FR 2870308, un troisième système amortissant.

Le revêtement absorbant selon FR 2870308, fixé sur une structure, est pourvu d'une couche absorbante en matériau élastique qui comporte un maillage dissipateur. Ce maillage, agencé dans le matériau élastique, est constitué d'une pluralité de noeuds et d'éléments dissipateurs.

Dans un tel dispositif, l'énergie vibratoire absorbée est dissipée principalement sous forme de chaleur, par déformation de la matière.

La dissipation d'énergie dans la couche absorbante est importante puisque la matière élastique de la couche absorbante est déformée, d'une part, par un effet de bras de levier provoqué par les noeuds qui maintiennent les éléments dissipateurs éloignés de la structure et, d'autre part, par les éléments dissipateurs qui répartissent les sollicitations transmises par les noeuds dans l'ensemble de la matière élastique tout en les amplifiant par un effet géométrique.

Ce système est très efficace mais la couche absorbante représente une masse non négligeable.

Enfin, le document FR 2909740 présente un quatrième système amortissant. Ce document FR 2909740 prévoit un revêtement absorbant à haut pouvoir amortissant qui comporte un maillage dissipateur constitué d'une pluralité d'éléments dissipateurs et de noeuds, l'extrémité inférieure des noeuds étant fixée sur la structure. Ce revêtement est remarquable en ce que, l'extrémité inférieure des noeuds étant en saillie des éléments dissipateurs afin de créer un espace libre entre les éléments dissipateurs et la structure, le revêtement absorbant est muni d'éléments absorbants principaux agencés dans ledit espace libre, ces éléments absorbants principaux étant solidarisés d'une part à une face inférieure des éléments dissipateurs et d'autre part à la structure.

Les performances du revêtement absorbant sont très intéressantes. Néanmoins, on constate qu'il est difficile de le fabriquer en grande série ce qui rend son exploitation parfois délicate.

La présente invention a alors pour objet de proposer un revêtement isolant relativement léger, permettant d'amortir considérablement les déformations dynamiques d'une structure tout en restant facilement usinable.

Selon l'invention, un revêtement isolant à haut pouvoir amortissant apte à être fixé sur une structure, comporte un maillage dissipateur constitué d'une pluralité d'éléments dissipateurs et de noeuds dont une extrémité inférieure est fixée sur ladite structure, chaque élément dissipateur étant solidarisé à un premier et un deuxième noeuds, l'extrémité inférieure des noeuds étant en saillie des éléments dissipateurs afin d'être apte à créer un espace libre entre les éléments dissipateurs et la structure.

Ce revêtement isolant est remarquable en ce qu'au moins un élément dissipateur est muni d'au moins une branche pourvue d'au moins un tronçon et d'un élément pesant fixé à cet au moins un tronçon, cet élément pesant ayant une première masse supérieure ou égale à une deuxième masse dudit au moins un tronçon. Dès lors, la branche a une masse totale égale à la somme des première et deuxième masses.

Avantageusement, la deuxième masse est quasi-négligeable comparée à la première masse.

Un tel revêtement isolant ne transmet qu'une faible partie de l'énergie vibratoire incidente car il en réfléchit une grande partie vers la source et en dissipe aussi une grande partie sous forme mécanique, et non thermique comme dans le cas du document FR 2870308.

Ainsi, l'invention va à l'encontre de préjugés consistant à penser que l'isolation vibratoire et/ou phonique d'une structure par effet de masse conduit à utiliser un revêtement particulièrement lourd.

En effet, un déplacement originel des noeuds conduit géométriquement à un déplacement amplifié de l'élément pesant agencé sur l'élément dissipateur concerné, selon un rapport d'amplification p de l'élément dissipateur.

Dès lors, si on soumet les noeuds à une excitation $\underline{X}$ de fréquence $\underline{W}$, l'élément pesant de masse $\underline{m}$ génère une première force F1 égale à :

$$F1 = \rho * X * m * W^2$$

où « * » représente le signe de la multiplication.

Par ailleurs, cette première force F1 générée par l'élément pesant est transmise aux noeuds en étant aussi amplifiée selon le rapport p. Par conséquent, l'effort dynamique F2 récupéré au niveau des premier et deuxième noeuds est aussi amplifié selon le rapport d'amplification p de l'élément dissipateur soit :

$$F2 = \rho^2 * X * m * W^2$$

où « * » représente le signe de la multiplication.

Par conséquent, un élément pesant de masse $\underline{m}$ utilisé sur un revêtement isolant selon l'invention permet de générer une isolation vibratoire et/ou phonique au moins équivalente à un élément classique ayant une masse $\underline{M}$ égale au produit de la masse $\underline{m}$ de l'élément pesant par le rapport d'amplification $\rho$ élevé à la puissance deux. On appelle alors par commodité un tel revêtement « revêtement isolant à masse amplifiée », la masse de l'élément pesant étant en quelque sorte amplifiée par la branche de l'élément dissipateur.

Outre, un excellent résultat, on constate qu'un tel revêtement isolant est aisément fabricable ce qui permet d'envisager son utilisation sur une grande série.

Ce revêtement peut de plus comporter une ou plusieurs des caractéristiques additionnelles qui suivent.

Par exemple, l'élément pesant est réalisé dans la même matière que ledit au moins un tronçon mais occupe un premier volume supérieure à un deuxième volume occupé par ledit au moins un tronçon. Le premier volume occupé par l'élément pesant étant supérieure au deuxième volume occupé par le ou les tronçons de la branche associée, la première masse est de fait supérieure à la deuxième masse.

Eventuellement en variante, ledit élément pesant est réalisé à partir à partir d'une première matière alors que ledit au moins un tronçon de la branche correspondante d'un élément dissipateur est réalisé à partir d'une deuxième matière, les première et deuxième matières sont distinctes.

Par exemple, la première matière est choisie parmi les matières particulièrement pesantes, tel qu'un alliage de carbone et de tungstène connu sous la marque inermet®.

A contrario, les tronçons d'une branche d'un élément dissipateur étant rigide et étant utilisée dans leur domaine de déformation élastique, la deuxième matière fait partie du groupe de matériaux comprenant les matières dites plastiques

Dès lors, la première matière a une première masse volumique favorablement supérieure à une deuxième masse volumique de ladite deuxième matière.

Par ailleurs, un élément pesant d'une branche peut être agencé contre un premier et un deuxième tronçons de cette branche associée. Plus spécifiquement, il est concevable d'agencer un élément pesant entre un premier et un deuxième tronçons d'une branche.

Par suite, le premier tronçon d'une branche est fixé d'une part à un premier noeud et d'autre part à un élément pesant, le deuxième tronçon de cette branche étant fixé à un deuxième noeud et audit élément pesant.

Chaque branche ayant un premier et un deuxième tronçons, les premier et deuxième tronçons ont optionnellement une longueur identique pour optimiser le rapport d'amplification de la branche de l'élément dissipateur.

En outre, selon une première variante, chaque branche ayant un premier et un deuxième tronçons, les premier et deuxième tronçons sont rectilignes, et sont donc des barreaux droits.

Selon une deuxième variante, chaque branche ayant un premier et un deuxième tronçons, les premier et deuxième tronçons représentent chacun des quart d'ellipse.

Selon un premier mode de réalisation, chaque élément dissipateur comporte une unique branche, réalisée selon la première ou la deuxième variante par exemple.

Par contre, selon un deuxième mode de réalisation préféré, chaque élément dissipateur comporte une première et une deuxième branches, la première branche étant munie d'un premier élément pesant, la deuxième branche étant munie d'un deuxième élément pesant, chaque branche reliant un premier noeud à un deuxième noeud.

Ainsi, le premier tronçon de la première branche est fixé au premier noeud, le deuxième tronçon de la première branche étant fixé au deuxième noeud. Le premier élément pesant de la première branche est alors agencé contre les premier et deuxième tronçons de cette première branche, et éventuellement entre les premier et un deuxième tronçons de cette première branche.

De même, le premier tronçon de la deuxième branche est fixé au premier noeud, le deuxième tronçon de la deuxième branche étant fixé au deuxième noeud. Le deuxième élément pesant de la deuxième branche est alors agencé contre les premier et deuxième tronçons de cette deuxième branche, et éventuellement entre les premier et deuxième tronçons de cette deuxième branche.

En appliquant la première variante au deuxième mode de réalisation, l'élément dissipateur comportant une première et une deuxième branches formant ensemble un parallélogramme déformable, les premier et deuxième noeuds sont fixés à deux premiers sommets opposés du parallélogramme déformable et un premier et deuxième éléments pesants sont agencés au niveau des deux autres sommets opposés.

Avantageusement, les premier et deuxième tronçons de chacune des branches sont de longueurs égales. De plus, le premier tronçon de la première branche étant parallèle au deuxième tronçon de la deuxième branche, le deuxième tronçon de la première branche étant parallèle au premier tronçon de la deuxième branche, l'élément dissipateur a une forme de losange.

En appliquant la deuxième variante au deuxième mode de réalisation, l'élément dissipateur comportant une première et un deuxième branches formant ensemble une ellipse, la première branche étant munie d'un premier élément pesant et la deuxième branche étant munie d'un deuxième élément pesant, les premier et deuxième noeuds sont situés sur un premier axe passant par le grand axe de l'ellipse formée, et les premier et deuxième éléments pesants sont agencés sur un deuxième axe passant par le petit axe de l'ellipse.

L'invention et ses avantages apparaîtront avec plus de détails dans le cadre de la description qui suit avec des exemples de réalisation donnés à titre illustratif en référence aux figures annexées qui représentent :

- la figure 1, une vue de dessus d'un revêtement isolant selon un deuxième mode de réalisation préféré,

- la figure 2, une coupe d'un revêtement isolant selon un deuxième mode de réalisation préféré,

- la figure 3, une vue de dessus d'un motif triangulaire d'un maillage dissipateur d'un revêtement isolant selon un deuxième mode de réalisation préféré,

- les figures 4 et 5, un élément dissipateur selon une première variante d'un premier mode de réalisation,

- les figures 6 et 7, un élément dissipateur selon une deuxième variante d'un premier mode de réalisation,

- les figures 8 et 9, un élément dissipateur selon une première variante d'un deuxième mode de réalisation, et

- les figures 10 et 11, un élément dissipateur selon une deuxième variante d'un deuxième mode de réalisation.

Les éléments présents dans plusieurs figures distinctes sont affectés d'une seule et même référence.

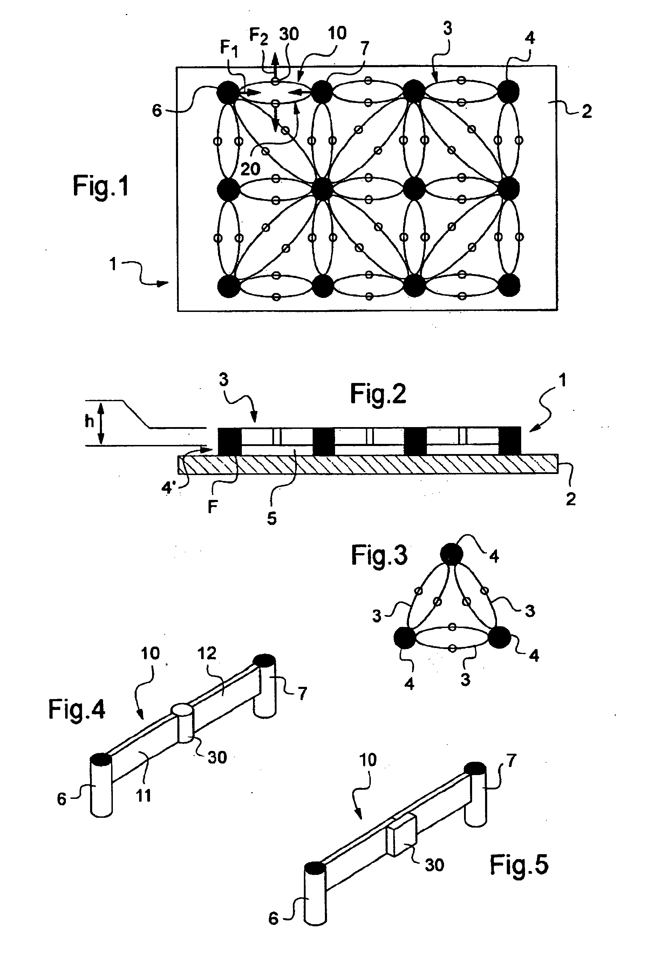

La figure 1 présente un revêtement isolant 1 à masse amplifiée agencé sur une structure 2.

Le revêtement isolant 1 comporte une couche incluant un maillage dissipateur constitué d'une pluralité de noeuds 4 et d'éléments dissipateurs 3.

Indépendamment du mode de réalisation, chaque branche 10, 20 est pourvue d'un élément pesant 30 constitué d'une première matière.

De plus, chaque élément dissipateur comportant au moins un tronçon reliant un premier et un deuxième noeuds 6, 7, cet au moins un tronçon est constitué d'une deuxième matière rigide du groupe des matériaux dits plastique avantageusement distincte de la première matière de l'élément pesant associée.

Néanmoins, à titre de variante, les première et deuxième matières peuvent être identiques.

En référence à la figure 2, le revêtement isolant 1 est fixé sur une structure 2.

Pour ce faire, les extrémités 4' de chaque noeud 4 saille des éléments dissipateurs 3. Dès lors, leur face inférieure F est liée à la structure 20, par collage ou vissage par exemple, de manière à éloigner les éléments dissipateurs 3 de la structure 2 en créant un espace libre entre les éléments dissipateurs 3 et la structure 2.

Dans le but de faciliter le montage du revêtement isolant sur la structure 2, la face inférieure F de chaque extrémité 4' est recouverte d'un matériau auto-adhésif. On remarque que ce montage est particulièrement facile à réaliser. Ainsi, on peut installer le revêtement isolant 1 sur n'importe quel type de paroi existante, un plafond de la cabine d'un giravion par exemple, sans surcoût particulier.

En outre, la ou les branches 10, 20 et de fait le ou les éléments pesants 30 de ces éléments dissipateurs 3 constituent conjointement une unique couche dissipatrice d'une hauteur h relativement faible. Le revêtement isolant 1 a alors un encombrement faible ce qui autorise un montage sur une structure même si cette dernière se trouve dans un espace exigu.

Par ailleurs, la figure 1 présente un maillage dissipateur muni d'un motif récurrent carré comportant quatre noeuds 4 et quatre éléments dissipateurs 3 qui représentent respectivement les coins et les côtés d'un carré. De plus, un cinquième élément dissipateur est disposé selon une diagonale de ce carré.

Conformément à la figure 3, le motif récurrent du maillage dissipateur peut être triangulaire, trois noeuds 4 et trois éléments dissipateurs 3 représentant alors respectivement les coins et les côtés d'un triangle.

D'un point de vue fonctionnel lorsque la structure 2 est déformée sous l'effet d'une vibration, quel que soit le mode (traction, flexion...) de la sollicitation, les noeuds 4 se déplacent entraînant ainsi une déformation des éléments dissipateurs.

Géométriquement, le déplacement selon la deuxième flèche F2 des éléments pesants 30 est amplifié par la branche 10, 20 associée selon le rapport d'amplification p généré par la forme de ladite branche 10, 20, par rapport au déplacement selon la première flèche F1 des premier et deuxième noeuds 6, 7 correspondants.

Ainsi, une excitation $\underline{X}$ de fréquence $\underline{W}$ des premier et deuxième noeuds 6, 7 induit en retour la création par un élément pesant 30 d'une première force F1 égale à :

$$F1 = \rho * X * m * W^2$$

où « * » représente le signe de la multiplication et « $\underline{m}$ » représente la masse de l'élément pesant.

Cette première force F1 générée par l'élément pesant est alors transmise aux premier et deuxième noeuds en étant aussi amplifiée selon le rapport d'amplification p. Par conséquent, l'effort dynamique F2 récupéré au niveau des premier et deuxième noeuds est égal à la première force F1 amplifiée selon le rapport d'amplification p de l'élément dissipateur soit :

$$F2 = \rho^2 * X * m * W^2$$

où « * » représente le signe de la multiplication.

L'invention permet donc d'amplifier la masse d'un élément pesant, et donc d'optimiser la masse d'un revêtement isolant 1. L'effet conjugué des éléments dissipateurs 3 et des noeuds 2 confère donc au revêtement isolant 1 un fort pouvoir dissipatif par effet de masse, sans avoir besoin de mettre en oeuvre un revêtement isolant ayant une masse importante.

En effet à performances équivalentes, un revêtement isolant par effet de masse classique a une masse totale égale au produit de la masse totale de l'invention et du rapport d'amplification p de ses éléments dissipateurs à la puissance deux.

Ainsi, la première masse de l'élément pesant est avantageusement supérieure à la deuxième masse de l'ensemble des tronçons de la branche associée pour optimiser l'efficacité du revêtement 1.

Selon les premier et deuxième modes de réalisation représentés sur les figures 4 à 11, un élément dissipateur 3 est muni d'un moins une branche 10, 20 allant d'un premier noeud 6 à un deuxième noeud 7.

Ladite au moins une branche 10, 20 est pourvue d'un premier et d'un deuxième tronçons 11, 12 contre lesquels est agencé un élément pesant 30, et éventuellement entre lesquels est agencé l'élément pesant 30. Avantageusement, ces premier et deuxième tronçons sont identiques et présentent dès lors une longueur identique.

L'élément pesant 30 est par conséquent situé à mi-distance entre les premier et deuxième noeuds 6, 7 ce qui maximise le rapport d'amplification p de l'élément dissipateur 3.

Selon le premier mode de réalisation représenté sur les figures 4 à 7, un élément dissipateur 3 est muni d'une unique branche 10 allant d'un premier noeud 6 à un deuxième noeud 7.

Plus précisément, selon une première variante du premier mode de réalisation explicitée par les figures 4 et 5, chaque unique branche 10 est pourvue d'un premier et d'un deuxième tronçons 11,12 rectilignes.

En référence à la figure 4, l'élément pesant 30 est agencé entre les premier et deuxième tronçons 11, 12. Par suite, le premier tronçon 11 est solidarisé au premier noeud 6 et à l'élément pesant 30 alors que le deuxième tronçon 12 est solidarisé au deuxième noeud 7 et à cet élément pesant 30.

En référence à la figure 5, l'élément pesant 30 est agencé contre les premier et deuxième tronçons 11, 12. Dès lors, le premier tronçon 11 est solidarisé au premier noeud 6 et au deuxième tronçon 12, ce deuxième tronçon 12 étant de plus solidarisé au deuxième noeud 7.

L'élément pesant 30 est alors préférentiellement fixé à mi-distance des premier et deuxième noeuds 6, 7. Les premier et deuxième tronçons 11, 12 étant identiques, l'élément pesant 30 est fixé conjointement aux premier et deuxième tronçons 11, 12.

On comprend que ces premier et deuxième tronçons peuvent constituer un seul et unique tronçon mécanique en étant usiné d'un bloc.

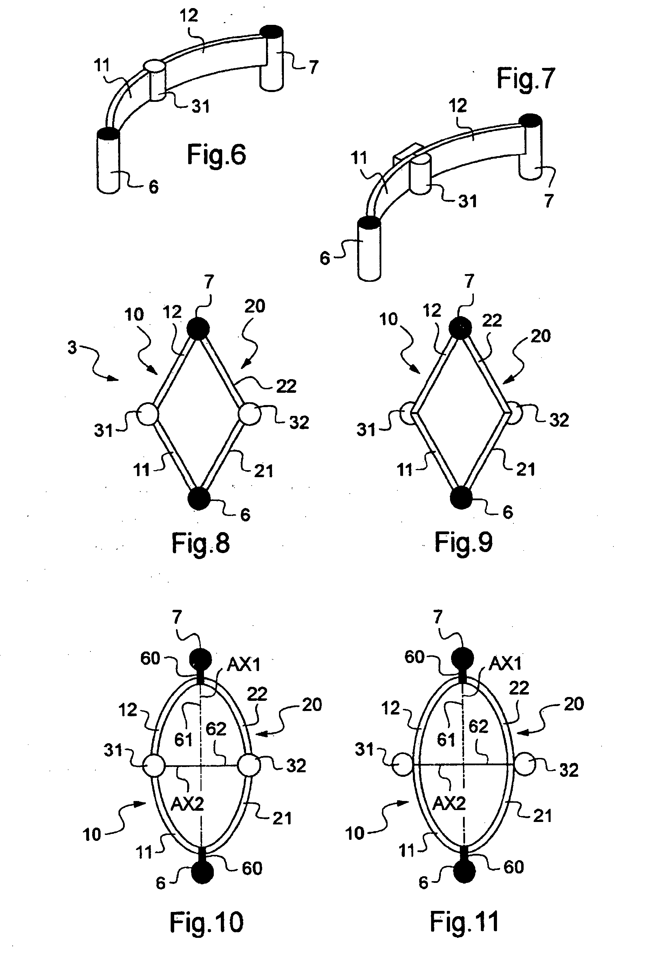

Selon une deuxième variante du premier mode de réalisation explicitée par les figures 6 et 7, chaque unique branche 10 de forme semi-elliptique est pourvue d'un premier et d'un deuxième tronçons 11, 12 représentant chacun des quart d'ellipse.

En référence à la figure 6, l'élément pesant 30 est agencé entre les premier et deuxième tronçons 11, 12. Par contre, en référence à la figure 7, l'élément pesant 30 est agencé contre les premier et deuxième tronçons 11, 12, les premier et deuxième tronçons 11, 12 étant en contact l'un avec l'autre de manière à former une demi-ellipse, à savoir la moitié d'une ellipse coupée selon son grand axe.

L'élément pesant 30 est alors préférentiellement fixé sur l'unique branche 10 à mi-distance des premier et deuxième noeuds 6, 7. Les premier et deuxième tronçons 11, 12 étant identiques, l'élément pesant 30 est fixé conjointement aux premier et deuxième tronçons 11, 12.

Les premier et deuxième noeuds 6, 7 sont disposés sur les intersections de la périphérie de la demi-ellipse et du grand axe de cette demi-ellipse.

Selon le deuxième mode de réalisation représenté sur les figures 8 à 11, un élément dissipateur 3 est muni d'une première et d'une deuxième branches 10, 20 allant d'un premier noeud 6 à un deuxième noeud 7.

Plus précisément, selon une première variante du deuxième mode de réalisation explicitée par les figures 8 et 9, chaque unique branche 10 est pourvue d'un premier et d'un deuxième tronçons 11, 12 rectilignes.

En référence à la figure 8, le premier élément pesant 31 de la première branche 10 est agencée entre les premier et deuxième tronçons 11, 12 de cette première branche 10. Par suite, le premier tronçon 11 de la première branche 10 est solidarisé au premier noeud 6 et au premier élément pesant 31 alors que le deuxième tronçon 12 de la première branche 10 est solidarisé au deuxième noeud 7 et à ce premier élément pesant 31. De même, le premier tronçon 21 de la deuxième branche 20 est solidarisé au premier noeud 6 et au deuxième élément pesant 32 alors que le deuxième tronçon 22 de la deuxième branche 20 est solidarisé au deuxième noeud 7 et au deuxième élément pesant 32.

L'élément dissipateur 3 représenté a alors la forme d'un parallélogramme déformable, les premier et deuxième noeuds 6, 7 étant fixés à deux premiers sommets opposés de ce parallélogramme déformable, les premier et deuxième éléments pesants 31, 32 étant agencés au niveau des deux autres sommets opposés

De plus, le premier tronçon 11 de la première branche 10 est parallèle et d'une longueur identique au deuxième tronçon 22 de la deuxième branche 20, le deuxième tronçon 12 de la première branche 10 étant parallèle et d'une longueur identique au premier tronçon 21 de la deuxième branche 20. L'élément dissipateur 3 a donc la forme d'un losange.

En référence à la figure 9, les premier et deuxième éléments pesant 31, 32 peuvent être agencés contre les premier et deuxième tronçons 11, 12 des première et deuxième branches 10, 20, sans être disposés entre les premier et deuxième tronçons 11, 12 des première et deuxième branches 10, 20 associées. Dès lors, le premier tronçon 11 est solidarisé au premier noeud 6 et au deuxième tronçon 12, ce deuxième tronçon 12 étant de plus solidarisé au deuxième noeud 7.

On comprend que ces premier et deuxième tronçons d'une même branche peuvent constituer un seul et unique organe mécanique usiné d'un bloc.

Selon une deuxième variante du deuxième mode de réalisation explicitée par les figures 10 et 11, les première et deuxième branches 10, 20 de forme semi-elliptique sont pourvues chacune d'un premier et d'un deuxième tronçons 11, 12, 21, 22 représentant chacun des quart d'ellipse.

En référence à la figure 10, un premier et un deuxième éléments pesants 31, 32 sont agencés entre les premier et deuxième tronçons 11, 12, 21, 22 respectivement des première et deuxième branches 10, 20.

Par contre, en référence à la figure 11, un premier et un deuxième éléments pesants 31, 32 sont agencés contre les premier et deuxième tronçons 11, 12, 21, 22 respectivement des première et deuxième branches 10, 20, les premier et deuxième tronçons 11, 12, 21, 22 de chaque branche étant en contact l'un avec l'autre de manière former une demi-ellipse, à savoir la moitié d'une ellipse coupée selon son grand axe.

Chaque élément pesant 30 est alors préférentiellement fixé sur une branche à mi-distance des premier et deuxième noeuds 6, 7. Les premier et deuxième tronçons 11, 12 étant identiques, l'élément pesant 30 est fixé conjointement aux premier et deuxième tronçons 11 ,12.

Les premier et deuxième noeuds 6, 7 sont disposés sur les intersections de la périphérie de la demi-ellipse et du grand axe de cette demi-ellipse.

Par suite, selon le deuxième mode de réalisation préféré, l'élément dissipateur 3 a une forme d'ellipse. Les premier et deuxième noeuds 6, 7 sont alors situés sur un premier axe AX1 passant par un grand axe de l'ellipse, les premier et deuxième éléments pesants 31, 32 étant agencés sur un deuxième axe AX2 passant par un petit axe de l'ellipse.

Plus précisément, les premier et deuxième noeuds 6, 7 peuvent constituer l'intersection de la périphérie de ladite ellipse et de son grand axe, ou être reliés à cette intersection par un organe de liaison 60

De cette manière, le rendement du revêtement isolant 1 selon l'invention est optimal. En effet, en raison de la géométrie d'une ellipse, une faible réduction de la taille du grand axe 61 de l'élément dissipateur 3 induit une augmentation importante de la taille du petit axe 62 de cet élément dissipateur en forme d'ellipse. Ainsi, une faible sollicitation de l'ellipse selon le grand axe 11 est fortement amplifiée en provoquant un déplacement important des éléments pesants situés sur le deuxième axe AX2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Revêtement (1) isolant à haut pouvoir amortissant apte à être fixé sur une structure (2), comportant un maillage dissipateur constitué d'une pluralité d'éléments dissipateurs (3) et de noeuds (4) dont l'extrémité inférieure (4') est fixée sur ladite structure (2), chaque élément dissipateur étant solidarisé à un premier et un deuxième noeuds (6, 7), ladite extrémité inférieure (4') desdits noeuds (4) étant en saillie desdits éléments dissipateurs (3) afin d'être apte à créer un espace libre (5) entre les éléments dissipateurs (3) et ladite structure (2), **caractérisé en ce qu'**au moins un élément dissipateur (3) est muni d'au moins une branche (10, 20) pourvue d'au moins un tronçon (11, 12, 21, 22) et d'un élément pesant (30, 31, 32) fixé audit au moins un tronçon (11, 12, 21, 22), ledit élément pesant (30, 31, 32) ayant une première masse supérieure ou égale à une deuxième masse dudit au moins un tronçon (11, 12, 21, 22).

2. Revêtement (1) isolant selon la revendication 1 **caractérisée en ce que** ledit élément pesant (30, 31, 32) est réalisé dans la même matière que ledit au moins un tronçon (11, 12, 21, 22) mais occupe un premier volume supérieure à un deuxième volume occupé par ledit au moins un tronçon (11, 12, 21, 22).

3. Revêtement (1) isolant selon la revendication 1, **caractérisé en ce que**, ledit élément pesant (30, 31, 32) étant réalisé à partir d'une première matière alors que ledit au moins un tronçon (11, 12, 21, 22) est réalisé à partir d'une deuxième matière, lesdites première et deuxième matières sont distinctes.

4. Revêtement (1) isolant selon la revendication 3, **caractérisé en ce que**, ladite première matière a une première masse volumique supérieure à une deuxième masse volumique de ladite deuxième matière.

5. Revêtement (1) isolant selon l'une quelconque des revendications précédentes, **caractérisé en ce que** ledit élément pesant (30,31, 32) est agencé contre un premier et un deuxième tronçons (11, 12, 21, 22) de ladite branche (10, 20) associée.

6. Revêtement (1) isolant selon l'une quelconque des revendications précédentes, **caractérisé en ce que** ledit élément pesant (30,31, 32) est agencé entre un premier et un deuxième tronçons (11, 12, 21, 22) de ladite branche (10, 20).

7. Revêtement (1) isolant selon l'une quelconque des revendications précédentes, **caractérisé en ce que**, ladite branche (10, 20) ayant un premier et un deuxième tronçons (11, 12, 21, 22), lesdits premier et deuxième tronçons (11, 12, 21, 22) ont une longueur identique.

8. Revêtement (1) isolant selon l'une quelconque des revendications précédentes, **caractérisé en ce que**, ladite branche (10, 20) ayant un premier et un deuxième tronçons (11, 12, 21, 22), lesdits premier et deuxième tronçons (11, 12, 21, 22) sont rectilignes.

9. Revêtement (1) isolant selon l'une quelconque des revendications 1 à 7, **caractérisé en ce que** ladite branche (10, 20) ayant un premier et un deuxième tronçons (11, 12, 21, 22), lesdits premier et deuxième tronçons (11, 12, 21, 22) représentent chacun des quart d'ellipse.

10. Revêtement (1) isolant selon l'une quelconque des revendications précédentes, **caractérisé en ce que** ledit élément dissipateur (3) comporte une première et un deuxième branches (10, 20), la première branche (10) étant munie d'un premier élément pesant (31), la deuxième branche (20) étant munie d'un deuxième élément pesant (32), chaque branche (10, 20) reliant un premier noeud à un deuxième noeud.

11. Revêtement (1) isolant selon l'une quelconque des revendications 1 à 8, **caractérisé en ce que** ledit élément dissipateur (3) comportant une première et un deuxième branches (10, 20) formant ensemble un parallélogramme déformable, lesdits premier et deuxième noeuds (6, 7) sont fixés à deux premiers sommets opposés dudit parallélogramme déformable et un premier et un deuxième éléments pesants (31, 32) sont agencés au niveau des deux autres sommets opposés.

12. Revêtement (1) isolant selon l'une quelconque des revendications 1 à 7, **caractérisé en ce que** ledit élément dissipateur (3) comportant une première et un deuxième branches (10, 20) formant ensemble une ellipse, la première branche (10) étant munie d'un premier élément pesant (31), la deuxième branche (20) étant munie d'un deuxième élément pesant (32), les premier et deuxième noeuds (6, 7) sont situés sur un premier axe (AX1) passant par un grand axe de l'ellipse, les premier et deuxième éléments pesants (31, 32) étant agencés sur un deuxième axe (AX2) passant par un petit axe de l'ellipse.

## Claims

1. An insulating covering (1) of high dampening power capable of being fixed to a structure (2), comprising a dissipating meshwork formed of a plurality of dissipating elements (3) and nodes (4), the lower end (4') of which is fixed to said structure (2), each dissipating element being secured to a first and a second node (6, 7), said lower end (4') of said nodes (4) protruding from said dissipating elements (3) in order to be capable of creating a free space (5) between the dissipating elements (3) and said structure (2), **characterised in that** at least one dissipating element (3) is provided with at least one branch (10, 20) which is provided with at least one section (11, 12, 21, 22) and a weighting element (30, 31, 32) fixed to said at least one section (11, 12, 21, 22), said weighting element (30, 31, 32) having a first mass greater than or equal to a second mass of said at least one section (11, 12, 21, 22).

2. An insulating covering (1) according to Claim 1, **characterised in that** said weighting element (30, 31, 32) is made from the same material as said at least one section (11, 12, 21, 22), but occupies a first volume which is greater than a second volume occupied by said at least one section (11, 12, 21, 22).

3. An insulating covering (1) according to Claim 1, **characterised in that**, said weighting element (30, 31, 32) being made from a first material whereas said at least one section (11, 12, 21, 22) is made from a second material, said first and second materials are distinct.

4. An insulating covering (1) according to Claim 3, **characterised in that** said first material has a first density greater than a second density of said second material.

5. An insulating covering (1) according to any one of the preceding claims, **characterised in that** said weighting element (30, 31, 32) is arranged against a first and a second section (11, 12, 21, 22) of said associated branch (10, 20).

6. An insulating covering (1) according to any one of the preceding claims, **characterised in that** said weighting element (30, 31, 32) is arranged between a first and a second section (11, 12, 21, 22) of said branch (10, 20).

7. An insulating covering (1) according to any one of the preceding claims, **characterised in that**, said branch (10, 20) having a first and a second section (11, 12, 21, 22), said first and second sections (11, 12, 21, 22) have an identical length.

8. An insulating covering (1) according to any one of the preceding claims, **characterised in that**, said branch (10, 20) having a first and a second section (11, 12, 21, 22), said first and second sections (11, 12, 21, 22) are rectilinear.

9. An insulating covering (1) according to any one of Claims 1 to 7, **characterised in that**, said branch (10, 20) having a first and a second section (11, 12, 21, 22), said first and second sections (11, 12, 21, 22) each represent quarters of an ellipse.

10. An insulating covering (1) according to any one of the preceding claims, **characterised in that** said dissipating element (3) comprises a first and a second branch (10, 20), the first branch (10) being provided with a first weighting element (31), the second branch (20) being provided with a second weighting element (32), each branch (10, 20) connecting a first node to a second node.

11. An insulating covering (1) according to any one of Claims 1 to 8, **characterised in that** said dissipating element (3) comprising a first and a second branch (10, 20) forming together a deformable parallelogram, said first and second nodes (6, 7) are fixed to two first opposing vertices of said deformable parallelogram and a first and a second weighting element (31, 32) are arranged at the level of the other two opposing vertices.

12. An insulating covering (1) according to any one of Claims 1 to 7, **characterised in that** said dissipating element (3) comprising a first and a second branch (10, 20) together forming an ellipse, the first branch (10) being provided with a first weighting element (31), the second branch (20) being provided with a second weighting element (32), the first and second nodes (6, 7) are located on a first axis (AX1) passing through a major axis of the ellipse, the first and second weighting elements (31, 32) being arranged on a second axis (AX2) passing through a minor axis of the ellipse.

## Patentansprüche

1. Isolierschutz (1) mit hohem Dämpfungsvermögen, der auf einem Körper (2) befestigt werden kann und ein Zerstreuungsnetzwerk aufweist, bestehend aus einer Mehrzahl von Zerstreuungselementen (3) und Knoten (4), deren unteres Ende (4') auf dem Körper (2) befestigt ist, wobei jedes Zerstreuungselement an einem ersten und einem zweiten Knoten (6, 7) befestigt ist, wobei das untere Ende (4') der Knoten (4) gegenüber den Zerstreuungselementen (3) übersteht, um einen Freiraum (5) zwischen den Zerstreuungselementen (3) und dem Körper (2) zu bilden, **dadurch gekennzeichnet, dass** mindestens ein Zerstreuungselement (3) mit mindestens einem Arm (10, 20) versehen ist mit mindestens einem Abschnitt (11, 12, 21, 22) und einem Gewichtselement (30, 31, 32), welches an dem mindestens einem Abschnitt (11, 12, 21, 22) befestigt ist, wobei das Gewichtselement (30, 31, 32) eine erste Masse aufweist, die größer oder gleich einer zweiten Masse des mindestens einen Abschnitts (11, 12, 21, 22) ist.

2. Isolierschutz (1) nach Anspruch 1, **dadurch gekennzeichnet, dass** das Gewichtselement (30, 31, 32) aus dem selben Material hergestellt ist, wie der mindestens eine Abschnitt (11, 12, 21, 22), jedoch ein erstes Volumen einnimmt, welches größer ist als ein zweites Volumen, welches von dem mindestens einen Abschnitt (11, 12, 21, 22) eingenommen wird.

3. Isolierschutz (1) nach Anspruch 1, **dadurch gekennzeichnet, dass** das Gewichtselement (30, 31, 32) ausgehend von einem ersten Material hergestellt ist, während der mindestens eine Abschnitt (11, 12, 21, 22) ausgehend von einem zweiten Material hergestellt ist, wobei das erste und das zweite Material unterschiedlich sind.

4. Isolierschutz (1) nach Anspruch 3, **dadurch gekennzeichnet, dass** das erste Material eine erste Dichte aufweist, die größer ist als eine zweite Dichte des zweiten Materials.

5. Isolierschutz (1) nach einem der vorstehenden Ansprüche, **dadurch gekennzeichnet, dass** das Gewichtselement (30, 31, 32) gegen einen ersten und einen zweiten Abschnitt (11, 12, 21, 22) des zugehörigen Arms (10, 20) angeordnet ist.

6. Isolierschutz (1) nach einem der vorstehenden Ansprüche, **dadurch gekennzeichnet, dass** das Gewichtselement (30, 31, 32) zwischen einem ersten und einem zweiten Abschnitt (11, 12, 21, 22) des Arms (10, 20) angeordnet ist.

7. Isolierschutz (1) nach einem der vorstehenden Ansprüche, **dadurch gekennzeichnet, dass** der Arm (10, 20) einen ersten und einen zweiten Abschnitt (11, 12, 21, 22) aufweist, wobei der erste und der zweite Abschnitt (11, 12, 21, 22) eine gleiche Länge aufweisen.

8. Isolierschutz (1) nach einem der vorstehenden Ansprüche, **dadurch gekennzeichnet, dass** der Arm (10, 20) einen ersten und einen zweiten Abschnitt (11, 12, 21, 22) aufweist, wobei die ersten und zweiten Abschnitte (11, 12, 21, 22) gradlinig sind.

9. Isolierschutz (1) nach einem der Ansprüche 1 bis 7, **dadurch gekennzeichnet, dass** der Arm (10, 20) einen ersten und einen zweiten Abschnitt (11, 12, 21, 22) aufweist, wobei der erste und der zweite Abschnitt (11, 12, 21, 22) jeweils die Form einer Viertelellipse aufweisen.

10. Isolierschutz (1) nach einem der vorstehenden Ansprüche, **dadurch gekennzeichnet, dass** das Zerstreuungselement (3) einen ersten und einen zweiten Arm (10, 20) aufweist, wobei der erste Arm (10) mit einem ersten Gewichtselement (31) versehen ist, der zweite Arm (20) mit einem zweiten Gewichtselement (32) versehen ist und jeder Arm (10, 20) einen ersten Knoten mit einem zweiten Knoten verbindet.

11. Isolierschutz (1) nach einem der Ansprüche 1 bis 8, **dadurch gekennzeichnet, dass** das Zerstreuungselement (3) einen ersten und einen zweiten Arm (10, 20) aufweist, die zusammen ein verformbares Parallelogramm bilden, wobei der erste und der zweite Knoten (6, 7) an zwei sich gegenüberliegenden Spitzen des verformbaren Parallelogramms befestigt sind und ein erstes und ein zweites Gewichtselement (31, 32) auf der Höhe der beiden anderen sich gegenüberliegenden Spitzen angeordnet sind.

12. Isolierschutz (1) nach einem der Ansprüche 1 bis 7, **dadurch gekennzeichnet, dass** das Zerstreuungselement (3) einen ersten und einen zweiten Arm (10, 20) aufweist, die zusammen eine Ellipse bilden, wobei der erste Arm (10) mit einem ersten Gewichtselement (31) und der zweite Arm (20) mit einem zweiten Gewichtselement (32) versehen ist, wobei die ersten und zweiten Knoten (6, 7) auf einer ersten Achse (AX1) gelegen sind, die durch eine große Achse der Ellipse verläuft, wobei die ersten und zweiten Gewichtselemente (31, 32) auf einer zweiten Achse (AX2) angeordnet sind, die durch eine kleine Achse der Ellipse verläuft.

Fig.1

Fig.2

Fig.3

Fig.4

Fig.5

Fig.6

Fig.7

Fig.8

Fig.9

Fig.10

Fig.11

**EP 2 444 687 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870308
- FR 2909740